(19) **Europäisches Patentamt European Patent Office Office européen des brevets**

(11) **EP 4 318 625 A1**

(12) **EUROPEAN PATENT APPLICATION**

(43) Date of publication:
**07.02.2024 Bulletin 2024/06**

(21) Application number: **23186799.5**

(22) Date of filing: **20.07.2023**

(51) International Patent Classification (IPC):
*H01M 4/04* (2006.01)      *H01M 4/133* (2010.01)
*H01M 4/134* (2010.01)     *H01M 4/36* (2006.01)
*H01M 4/38* (2006.01)      *H01M 4/587* (2010.01)
*H01M 4/62* (2006.01)      *H01M 4/1395* (2010.01)
*H01M 10/0525* (2010.01)   *H01M 4/02* (2006.01)

(52) Cooperative Patent Classification (CPC):
**H01M 4/0404; H01M 4/0435; H01M 4/133;
H01M 4/134; H01M 4/366; H01M 4/386;
H01M 4/587; H01M 4/622;** H01M 4/1395;
H01M 10/0525; H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.07.2022 KR 20220092580**

(71) Applicant: **SK On Co., Ltd.**
**Seoul 03161 (KR)**

(72) Inventors:
• **KIM, Hyo Mi**
  **34124 Daejeon (KR)**
• **KIM, Moon Sung**
  **34124 Daejeon (KR)**

• **RYU, Sang Baek**
  **34124 Daejeon (KR)**
• **PARK, Da Hye**
  **34124 Daejeon (KR)**
• **YOOK, Seung Hyun**
  **34124 Daejeon (KR)**
• **JANG, Hwan Ho**
  **34124 Daejeon (KR)**
• **JEONG, Kwang Ho**
  **34124 Daejeon (KR)**
• **CHUNG, Da Bin**
  **34124 Daejeon (KR)**
• **HAN, Jun Hee**
  **34124 Daejeon (KR)**

(74) Representative: **Prüfer & Partner mbB
Patentanwälte · Rechtsanwälte
Sohnckestraße 12
81479 München (DE)**

(54) **ANODE FOR LITHIUM SECONDARY BATTERY AND LITHIUM SECONDARY BATTERY INCLUDING THE SAME**

(57)      An anode for a lithium secondary battery according to exemplary embodiments of the present disclosure includes: an anode current collector; an adhesive layer formed on the anode current collector and includes a first binder; and an anode active material layer formed on the adhesive layer and includes an anode active material including silicon-carbon composite particles and a second binder. The silicon-carbon composite particles include carbon-based particles including pores, and a silicon coating layer formed inside the pores.

<u>130</u>

FIG. 1

**Description**

BACKGROUND

1. Field of the Invention

The present disclosure relates to an anode for a lithium secondary battery and a lithium secondary battery including the same. More specifically, the present disclosure relates to an anode including a silicon-based anode active material and a lithium secondary battery including the anode.

2. Description of the Related Art

A secondary battery is a battery that can be repeatedly charged and discharged. Lithium secondary batteries have a high operating voltage and a high energy density per unit weight and are advantageous in terms of a charging speed and light weight. In this regard, the lithium secondary battery has been actively developed and applied as a power source to portable electronic devices such as mobile phones, laptop computers, etc. and electric vehicles.

A lithium secondary battery may be comprised of an electrode assembly including a cathode, an anode, and a separation membrane interposed between the cathode and the anode; electrolyte; and a case (for example, a pouch) in which the electrode assembly and the electrolyte are housed. The anode may include an anode current collector and an anode active material layer formed on the anode current collector., wherein the anode active material layer includes an anode active material capable of intercalating and deintercalating lithium ions and a binder. Graphite is one commonly employed anode active material.

As the application field of the lithium secondary battery expands to large electronic devices and electric vehicles, development of a lithium secondary battery having a higher capacity is required. For example, a silicon-based anode active material has a theoretical capacity 10 times higher than that of graphite, such that technologies, to which the silicon-based anode active material is applied as the anode active material, have been proposed.

However, silicon-based anode active material undergoes large volume change due to the intercalation and deintercalation of lithium ions. Consequently, the anode active material may be easily displaced from the anode current collector during operation of the lithium secondary battery, thereby reducing lifespan of the lithium secondary battery.

Provided herein is an anode for a lithium secondary battery that has high capacity and improved operational stability and a lithium secondary battery including the same.

SUMMARY

In one aspect, the present disclosure provides an anode for a lithium secondary battery comprising: an anode current collector; an adhesive layer formed on the anode current collector and comprising a first binder; and an anode active material layer formed on the adhesive layer and comprising an anode active material comprising a plurality of silicon-carbon composite particles and a second binder, wherein the silicon-carbon composite particles comprise carbon-based particles, each having a plurality of pores and a silicon coating layer formed inside the pores.

In one embodiment, a silicon coating layer may also be formed on an outer surface of the silicon-carbon composite particles.

In one embodiment, the pores comprise a larger amount of silicon atoms than the outer surface of the silicon-carbon composite particles.

In one embodiment, the silicon-carbon composite particles may comprise a silicon oxide coating layer formed on a surface of the silicon coating layer and a carbon coating layer formed on a surface of the silicon oxide coating layer.

In one embodiment, the silicon-carbon composite particles may comprise about 30 wt.% to about 50 wt.% of silicon atoms.

In one embodiment, the adhesive layer may comprise about 80% or more of the first binder.

In one embodiment, the anode active material layer may comprise about 80 wt.% or more of the silicon-carbon composite particles.

In one embodiment, the anode active material layer may further include a first cellulosic thickener having a weight average molecular weight of about $4 \times 10^5$ g/mol or more and less than about $3 \times 10^6$ g/mol.

In one embodiment, the adhesive layer may further optionally include a second cellulosic thickener having a greater weight average molecular weight than that of the first cellulosic thickener.

In one embodiment, the second cellulosic thickener may have a weight average molecular weight of about $3 \times 10^6$ g/mol to about $6 \times 10^6$ g/mol.

In one embodiment, the first cellulosic thickener may have a degree of substitution of about 0.8 to about 1.5 and the second cellulosic thickener may have a degree of substitution of about 0.5 to about 1.

In one embodiment, the first binder and the second binder may include a first styrene-butadiene rubber and a second styrene-butadiene rubber, respectively, and the first styrene-butadiene rubber comprise a greater molar ratio of the butadiene-derived units than the second styrene-butadiene rubber.

In one embodiment, the first styrene-butadiene rubber may comprise about 55 mol% to about 95 mol% of butadiene-derived units.

In one embodiment, the second styrene-butadiene rubber about 5 mol% to about 50 mol% of butadiene-derived units.

In one embodiment, a ratio of a thickness of the anode active material layer to a thickness of the adhesive layer may be about 15 to about 80.

In one embodiment, the adhesive layer may have a thickness of about 0.5 $\mu$m to about 5 $\mu$m, and the anode active material layer may have a thickness of about 30 $\mu$m to about 40 $\mu$m.

In some embodiments, an anode for a lithium secondary battery comprises an anode current collector; an anode active material layer; and an adhesive layer formed between the anode current collector and the anode active material layer. The anode active material layer may include silicon-carbon composite particles. By including the anode active material as disclosed herein in an anode of a lithium secondary battery, it is possible to provide a lithium secondary battery having high capacity and improved life-span properties.

In some embodiments, the anode active material layer may further include a cellulosic thickener having a weight average molecular weight in a predetermined range. Accordingly, the silicon-carbon composite particles of the anode active material layer may be more uniformly distributed. In addition, by including an anode as disclosed herein, comprising the anode active material as disclosed herein, it is possible to provide a lithium secondary battery having low internal resistance and improved rapid charging performance.

BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic cross-sectional view illustrating an anode for a lithium secondary battery according to exemplary embodiments; and

FIGS. 2 and 3 are a cross-sectional view and a schematic plan view illustrating a lithium secondary battery according to exemplary embodiments, respectively.

DETAILED DESCRIPTION

In one aspect, the present disclosure provides an anode active material comprising silicon-carbon composite particles comprising carbon-based particles, each of which comprise a plurality of pores and a silicon coating layer formed inside the pores.

In some embodiments, the carbon-based particles comprise crystalline carbon, amorphous carbon (such as hard carbon or soft carbon), the like, or any combination thereof.

In some embodiments, silicon-carbon composite particles further comprise a silicon coating layer on an outer surface of the silicon-carbon composite particles.

In some embodiments, the silicon-carbon composite particles may optionally further comprise a silicon oxide coating layer formed on a surface of the silicon coating layer. In some embodiments, the silicon oxide is $SiO_x$, wherein $0 < x < 2$.

In some embodiments, the silicon-carbon composite particles optionally may further comprise a carbon coating layer formed on a silicon oxide coating layer formed on a surface of the silicon coating layer. In some embodiments, the carbon coating layer comprises a conductive polymer such as polyacetylene, polyaniline, polypyrrole, polythiophene, any combination thereof, but is not limited thereto. In some embodiments, the carbon coating layer may have a thickness of about 1 nm to about 30 nm, about 1 nm to about 20 nm, or about 2 nm to about 15 nm.

The term "about" means within 20%, within 15%, within 10%, within 9%, within 8%, within 7%, within 6%, within 5%, within 4%, within 3%, within 2%, within 1%, or less variation of a given value or range. When used to describe a temperature, the term "about" means with 5° (i.e., $\pm$ 5°) of that recited temperature.

In some embodiments, the silicon content of the silicon-carbon composite particles is about 5% by weight ("wt.%") or more, about 10 wt.% or more, about 20 wt.% or more, about 30 wt.% or more, or about 40 wt.% or more. In some embodiments, the silicon content of the silicon-carbon composite particles is about 90 wt.% or less, about 80 wt.% or less, about 70 wt.% or less, about 60 wt.% or less, or about 50 wt.% or less. In some embodiment, the silicon content of the silicon-carbon composite particles is about 5 wt.% to about 90 wt.%, about 10 wt.% to about 80 wt.%, about 20 wt.% to about 70 wt.%, about 30 wt.% to about 60 wt.%, about 30 wt.% to about 50 wt.%, or about 40 wt.% to about 60 wt.%. In some embodiments, the silicon content of the silicon-carbon composite particles is about 35 wt. % to about 45 wt. % or about 40 wt. % to about 45 wt. %. Silicon content may be measured by methods well-known in the art, such as by elemental analysis. For example, the content of silicon atoms may be measured by inductively coupled plasma optical emission spectrometry (ICP-OES).

In some embodiments, the silicon coating layer(s) (e.g., silicon layers inside the pores and/or on an outer surface of the silicon-carbon composite particle) of the silicon-carbon composite particles) has an amorphous structure.

In some embodiments, the silicon coating layer(s) (e.g., silicon layers inside the pores and/or on an outer surface of the silicon-carbon composite particle) of the silicon-carbon composite particles is characterized by a grain size of about 7 nm or less, about 6 nm or less, about 5 nm or less, or about 4 nm or less. Grain size may be measured by methods well-known in the art, such as by X-ray diffraction (XRD) analysis.

In some embodiments, the silicon-carbon composite particles may have a sphericity of 0.7 or more, 0.8 or more, or 0.9 or more.

In some embodiments, the silicon-carbon composite particles have an average particle diameter ($D_{50}$) of about 1.0 $\mu$m to about 10 $\mu$m, wherein $D_{50}$ is the particle diameter at a point of 50% of a volume-based particle diameter cumulative distribution. $D_{50}$ may be measured by methods well-known in the art, such as using a laser diffraction method (e.g., Microtrac, MT 3000).

As described above, silicon (Si)-based anode active materials have a high capacity but suffer from degradation in life span due to displacement of the anode active material stemming from change in the volume due to intercalation and deintercalation of lithium ions. Advantageously, the silicon coating layer into which the lithium ions intercalate and deintercalated is located inside the pores of the silicon-carbon composite particles disclosed herein, thereby reducing the change in the volume of the anode active material due to intercalation and deintercalation of the lithium ions. Accordingly, a battery using the silicon-carbon composite particles as disclosed herein may exhibit high capacity and increased life-span properties.

In some embodiments, the anode active material comprises about 80 wt.% or more or about 90 wt.% or more of the silicon-carbon composite particles. In some embodiments, the anode active material comprises about 99 wt.% or less, about 98 wt.% or less, about 97 wt.% or less, about 96 wt.% or less, or about 95 wt.% or less of the silicon-carbon composite particles. In some embodiments, the anode active material comprises about 80 wt.% to about 99 wt. %, about 80 wt.% to about 98 wt.%, about 80 wt.% to about 97 wt.%, about 80 wt.% to about 96 wt.%, about 80 wt.% to about 95 wt.%, about 90 wt.% to about 99 wt. %, about 90 wt.% to about 98 wt.%, about 90 wt.% to about 97 wt.%, about 90 wt.% to about 96 wt.%, or about 90 wt.% to about 95 wt.% of the silicon-carbon composite particles.

In one embodiment, the anode active material layer 124 may comprise about 5 wt.% or more, about 7 wt.% or more, or about 10 wt.% or more of the second binder. In some embodiments, the anode active material layer 124 may comprise about 20 wt.% or less, about 15 wt.% or less, or about 12 wt.% or less of the second binder. In some embodiments, the anode active material layer 124 comprises about 11 wt.% of the second binder.

In some embodiments, the anode active material comprises a second active material, in addition to the silicon-carbon composite particles disclosed herein. No limiting examples of suitable second active materials include a lithium alloy, a carbon-based active material, a silicon-based active material, and the like. For example, in some embodiments, the anode active material further comprises a lithium allow comprising one or more of aluminum, zinc, bismuth, cadmium, antimony, silicon, lead, tin, gallium, indium, and the like. In some embodiments, the anode active further comprises a carbon-based active material comprising one or more of crystalline carbon, amorphous carbon, carbon composite, carbon fiber and the like. Non-limiting examples of amorphous carbon include hard carbon, cokes, mesocarbon microbead, mesophase pitch-based carbon fiber, and the like. Non-limiting examples of crystalline carbon include natural graphite, graphite cokes, graphite MCMB, graphite MPCF, and the like.

In another aspect, the present disclosure provides an anode, e.g., for use in a secondary battery including: an anode current collector; an adhesive layer formed on the anode current collector and comprising a first binder; and an anode active material layer formed on the adhesive layer and comprising an anode active material including a plurality of silicon-carbon composite particles and a second binder, wherein the silicon-carbon composite particles comprising carbon-based particles including pores, and a silicon coating layer formed inside the pores.

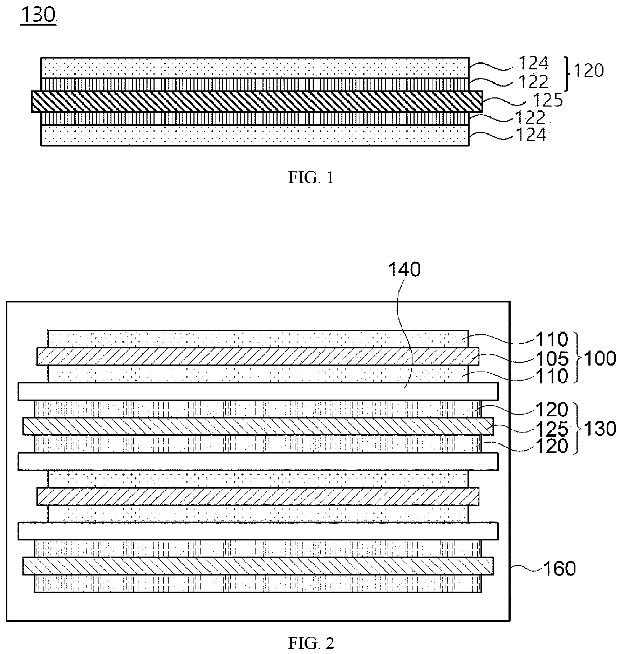

**FIG. 1** is a schematic cross-sectional view of one embodiment of an anode for a lithium secondary battery. In **FIG. 1,** an anode 130 for a lithium secondary battery may include an anode current collector 125 and an anode slurry layer 120 formed on the anode current collector 125. For example, the anode slurry layer 120 may be formed on one surface or both surfaces of the anode current collector 125.

In some embodiments, the anode current collector 125 comprises a metal selected from the group consisting of gold, stainless steel, nickel, aluminum, titanium, copper, and any alloy thereof. In one embodiment, the anode current collector comprises copper, such as a copper foil.

The anode slurry layer 120 may comprise (a) an adhesive layer 122, formed on the anode current collector 125 and which comprises a metal and a first binder and (b) an anode active material layer 124 as describe herein, formed on the adhesive layer 122 and which includes an anode active material and a second binder.

Advantageously, by including the adhesive layer **122** between the anode current collector **125** and the anode active material layer **124,** displacement of anode active material layer from the anode current collector during operation of the battery may be further reduced.

In some embodiments, the adhesive layer **122** may comprise about 80 wt.% or more, about 85 wt.% or more, about 90 wt.% or more, or about 95 wt.% or more of the first binder.

In some embodiments, the first binder comprises a first styrene-butadiene rubber. In some embodiments, the first styrene-butadiene rubber may comprise about 55 mol% to about 95 mol%, about 70 mol% to about 95 mol%, or about 80 mol% to about 95 mol% of butadiene-derived units, based on 100 mol% of all repeating units. In one embodiment, the first styrene-butadiene rubber comprises about 85 mol% to about 95 mol% or about 88 mol% to about 92 mol% of butadiene-derived units.

In some embodiments, the second binder comprises a second styrene-butadiene rubber. In some embodiments, the second styrene-butadiene rubber may comprise about 5 mol% to about 60 mol%, 5 mol% to about 50 mol%, about 15 mol% to about 50 mol%, or about 30 mol% to about 50 mol%, or about 45 mol% to about 55 mol% butadiene-derived units, based on 100 mol% of total repeating units. In one embodiment, the second styrene-butadiene rubber comprises about 50 mol% butadiene-derived units.

By using a first styrene-butadiene rubber having a higher molar ratio of butadiene-derived units than the second styrene-butadiene rubber, the adhesive force of the adhesive layer **122** to the anode current collector **125** may be increased while decreasing the specific resistance of the anode active material layer **124.**

In some embodiments, the anode slurry layer **120** may comprise about 0.1 wt.% or more, about 0.5 wt.% or more, about 1 wt.% or more, or about 2 wt.% or more of the first binder. In some embodiments, the anode slurry layer **120** may comprise about 10 wt.% or less, about 7 wt.% or less, about 5 wt.% or less, or about 3 wt.% of the first binder.

In some embodiments, the adhesive force of the first binder to the anode current collector **125** is greater than the adhesive force of the second binder to the anode current collector **125,** thereby improving lifespan of the battery. In some embodiments, the second binder may have a smaller specific resistance than a specific resistance of the first binder thereby improving rapid charging performance of the battery.

In some embodiments, the anode active material layer **124** may further comprise a first cellulosic thickener. Non-limiting examples of suitable cellulosic thickeners that may be used in the anode active material layer include carboxymethyl cellulose (CMC), carboxymethyl cellulose sodium salt, methyl cellulose, ethyl cellulose, hydroxyethyl cellulose, carboxyethyl cellulose, and combinations thereof. In one embodiment, the first cellulosic thickener is CMC. In some embodiments, the anode active material layer may comprise about 0.1 wt.% to about 10 wt.%, about 0.5 wt.% to about 7.5 wt.%, or about 1 wt.% to about 5 wt.% of the first cellulosic thickener. In one embodiment, the anode active material comprises about 1 wt.% of the first cellulosic thickener.

In some embodiments, the first cellulosic thickener has a weight average molecular weight of about $4\times10^5$ g/mol or more and less than about $3\times10^6$ g/mol. In one embodiment, the first cellulosic thickener has a weight average molecular weight of about $4\times10^5$ g/mol. In some embodiments, the weight average molecular weight of the first cellulosic thickener is about $4\times10^5$ g/mol or more and less than about $2\times10^6$ g/mol.

In some embodiments, the first cellulosic thickener may have a degree of substitution of about 0.8 to about 1.5, about 0.9 to about 1.4, or about 1.0 to about 1.3. In one embodiment, the first cellulosic thickener has a degree of substitution of about 1.2. As used herein, degree of substitution refers to the degree to which hydroxyl groups of glucose units of cellulose are substituted by alkyl groups, acyl groups and the like. For example, the degree of substitution may be calculated as an average value of the number of substituted hydroxyl groups among three hydroxyl groups per glucose unit. In one embodiment, the first cellulosic thickener has a weight average molecular weight of about $4\times10^5$ g/mol and a degree of substitution of about 1.2.

In some embodiments, when the anode active material layer **124** comprises a cellulosic thickener as described herein, the silicon-carbon composite particles therein may be more uniformly distributed in the anode active material layer **124.** In addition, the internal resistance of the battery may be further reduced, and the rapid charging performance of the battery may be further improved.

In some embodiments, the adhesive layer **122** may further comprise a second cellulosic thickener. The second cellulosic thickener may have a greater weight average molecular weight than that of the first cellulosic thickener. Non-limiting examples of suitable cellulosic thickeners that may be used in the adhesive layer include carboxymethyl cellulose (CMC), carboxymethyl cellulose sodium salt, methyl cellulose, ethyl cellulose, hydroxyethyl cellulose, carboxyethyl cellulose, and combinations thereof. The first cellulosic thickener and the second cellulosic thickener may be made of the same type or different types of cellulose. In one embodiment, the second cellulosic thickener is CMC. In some embodiments, the adhesive layer **122** comprises about 0.1 wt.% to about 10 wt.%, about 0.2 wt.% to about 7 wt.%, about 0.5 wt.% to about 5 wt.%, or about 1 wt.% to about 5 wt.% of a second cellulosic thickener. In some embodiments, the adhesive layer **122** comprises about 3 wt. % of a second cellulosic thickener. In some embodiment, the adhesive layer **122** does not include a second cellulosic thickener.

In some embodiments, the second cellulosic thickener may have a weight average molecular weight of about

$3 \times 10^6$ g/mol or more, such as about $3 \times 10^6$ g/mol to about $6 \times 10^6$ g/mol or about $3 \times 10^6$ g/mol to about $4.5 \times 10^6$ g/mol. In some embodiments, the second cellulosic thickener has a weight average molecular weight of about $3 \times 10^6$ g/mol. In some embodiments, the second cellulosic thickener may have a degree of substitution of about 0.5 to about 1, about 0.55 to about 0.9, or about 0.6 to about 0.8. In one embodiment, the second cellulosic thickener has a weight average molecular weight of about $3 \times 10^6$ g/mol and a degree of substitution of about 0.6.

When incorporating a cellulosic thickener in the adhesive layer within one or more of these ranges, the adhesive force of the adhesive layer **122** and the rapid charging performance of the battery may be further improved.

In some embodiments, one or both of the adhesive layer **122** and the anode active material layer **124** further comprises a conductive material. Non-limiting examples of suitable conductive materials that may be included in an adhesive and/or anode active material layer include a carbon-based conductive material, such as graphite, carbon black, graphene, and carbon nanotubes, a metal-based conductive materials such as tin, tin oxide, titanium oxide, or a perovskite material such as $LaSrCoO_3$, and $LaSrMnO_3$. The conductive material in the adhesive layer **122** may be different or the same as the conductive material in the anode active material layer **124**. The amount of conductive material included in adhesive and/or anode active material layer is not particularly limited and one of ordinary skill in the art will be able to determine a suitable amount.

In some embodiments, the ratio of the thickness of the anode active material layer **124** to the thickness of the adhesive layer **122** may be about 2 to about 500, about 15 to about 80, or about 10 to about 40. In some embodiments, the adhesive layer **122** may have a thickness of about 0.1 $\mu$m to about 10 $\mu$m, about 0.5 $\mu$m to about 5 $\mu$m, or about 1 $\mu$m to about 3 $\mu$m. In one embodiment, the adhesive layer **122** has a thickness of about 2 $\mu$m. In some embodiments, the anode active material layer **124** may have a thickness of about 20 $\mu$m to about 50 $\mu$m, or about 30 $\mu$m to about 40 $\mu$m. In one embodiment, the anode active layer **124** has a thickness of about 40 $\mu$m. By sizing the anode active material layer and adhesive layer within one or more of these ranges, displacement of the anode active material layer **124** from the anode current collector **125** may be further reduced. In addition, the energy density of the anode and lifespan of the battery may be further improved.

In another aspect, the present disclosure provides a lithium secondary battery including an anode comprising an anode active material as described herein.

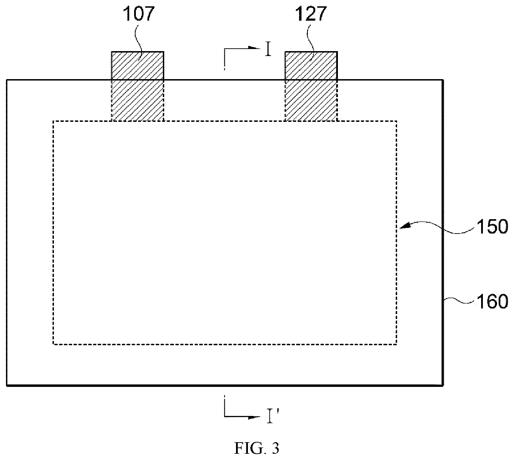

**FIGs. 2** and **3** are a cross-sectional view and a schematic plan view, respectively, illustrating one embodiment of a lithium secondary battery. Specifically, **FIG. 2** is a cross-sectional view taken on line I-I' in **FIG. 3**.

Referring to **FIG. 2**, the lithium secondary battery may include a cathode **100** and an anode **130** as described herein. The cathode **100** may include a cathode current collector **105** and a cathode active material layer **110** formed on the cathode current collector **105**. The cathode current collector **105** may comprise stainless steel, nickel, aluminum, titanium, copper, or an alloy thereof.

The cathode active material layer **110** may be made by dispersing a cathode active material, a cathode binder, and a conductive material in a solvent (or dispersion medium) to generate a cathode slurry, which may be applied to the cathode current collector **105,** dried, and pressed. In some embodiments, the cathode active material comprises lithium metal oxide particles capable of reversibly intercalating and deintercalating lithium ions. Non-limiting examples of suitable lithium metal oxide particles that may be used in the cathode active material include lithium cobalt oxide (LCO) particles, lithium manganese oxide (LMO) particles, lithium nickel oxide (LNO) particles, lithium nickel-cobalt-manganese oxide (NCM) particles, lithium nickel-cobalt-aluminum oxide (NCA) particles, lithium phosphate-iron (LFP) particles, over-lithiated oxide (OLO) particles, the like, and any combination thereof. In some embodiments, the cathode active material comprises lithium metal oxide particles containing nickel.

In some embodiments, the lithium metal oxide particles are lithium metal oxide particles represented by one or more of Formulas 1 to 3 below.

[Formula 1]    $Li_xNi_{(1-a-b)}CO_aM^1{}_bO_y$

In Formula 1, $M^1$ may be at least one of Al, Zr, Ti, Cr, B, Mg, Mn, Ba, Si, Y, W and Sr, and x, y, a and b may be in a range of $0.9 \leq x \leq 1.2$, $1.9 \leq y \leq 2.1$, and $0 \leq a+b \leq 0.5$, respectively.

[Formula 2]    $Li_{1+x}M^2{}_{1-x}O_2$

In Formula 2, x may be in a range of $0.05 < x \leq 0.5$, and $M^2$ may be one, two, or more selected from the group consisting of Ni, Co, Mn, Fe, Cr, V, Cu, Zn, Ti, Al, Mg, and B.

[Formula 3]    $a[Li_2MnO_3] \cdot (1-a)[LiM^3O_2]$

In Formula 3, a may be in a range of $0.1 \leq a \leq 0.9$, and $M_3$ may be one, two, or more selected from the group consisting of Ni, Co, Mn, Fe, Cr, V, Cu, Zn, Ti, Al, Mg, and B.

In some embodiments, the lithium metal oxide particles may further include a coating element or doping element. For example, the coating element or doping element may include Al, Ti, Ba, Zr, Si, B, Mg, P, Sr, W, La, or an alloy thereof or an oxide thereof. By using a doping element, a secondary battery that has improved life-span properties may be produced.

Non-limiting examples of suitable cathode binders that may be incorporated in the cathode slurry include organic binders such as polyvinylidene fluoride (PVDF), vinylidene fluoride-hexafluoropropylene copolymer, polyacrylonitrile, polymethyl methacrylate, etc., and any combination thereof, or an aqueous binder such as styrene-butadiene rubber (SBR). A cathode binder may be used together with a cellulosic thickener, such as the first cellulosic thickener or second cellulosic thickener as disclosed herein.

In some embodiments, the anode **130** may have a larger surface area than the surface area of the cathode **100,** thereby allowing lithium ions generated from the cathode **100** to smoothly move to the anode **130** without being precipitated in the middle.

The cathode **100** and the anode **130** may be alternately and repeatedly disposed to form an electrode assembly **150.**

In some embodiments, a separation membrane **140** may be interposed between the cathode **100** and the anode **130.** The separation membrane **140** may comprise a porous polymer film made of a polyolefin polymer, such as ethylene homopolymer, propylene homopolymer, ethylene/butene copolymer, ethylene/hexene copolymer, ethylene/ methacrylate copolymer, but is not limited thereto. Alternatively, for example, the separation membrane **140** may include a nonwoven fabric made of glass fiber having a high melting point, polyethylene terephthalate fiber but is not limited thereto. The electrode assembly **150** may be formed, for example, by winding, stacking, z-folding, etc. the separation membrane **140.**

According to **FIG. 3,** a lithium secondary battery may include: a cathode lead **107** connected to the cathode **100** and protruding to an outside of a case **160;** and an anode lead **127** connected to the anode **130** and protruding to the outside of the case **160.** The cathode **100** and the cathode lead **107** may be electrically connected with each other. Similarly, the anode **130** and the anode lead **127** may be electrically connected with each other. For example, the cathode lead **107** may be electrically connected to the cathode current collector **105.** In addition, the anode lead **127** may be electrically connected to the anode current collector **125.**

In some embodiments, the cathode current collector **105** may include a cathode tab (not illustrated) protruding from one side of the cathode current collector **105.** For example, the cathode tab may be formed integrally with the cathode current collector **105** or connected to the cathode current collector **105** by welding, but is not limited thereto. The cathode active material layer **110** may not be formed on the cathode tab. The cathode current collector **105** and the cathode lead **107** may be electrically connected with each other through the cathode tab.

In some embodiments, the anode current collector **125** may include an anode tab (not illustrated) protruding from one side of the anode current collector **125.** For example, the anode tab may be formed integrally with the anode current collector **125** or connected to the anode current collector **125** by welding, but is not limited thereto. The anode slurry layer **120** may not be formed on the anode tab. The anode current collector **125** and the anode lead **127** may be electrically connected with each other through the anode tab.

The above-described electrode assembly **150** and an electrolyte may be housed together in the case **160** to form a lithium secondary battery. The lithium secondary battery may be manufactured, for example, in a cylindrical shape, a square shape, a pouch type or a coin shape. As described above, the electrode assembly **150** may be housed in the case **160** together with the electrolyte to form the lithium secondary battery.

In some embodiments, the electrolyte may include a lithium salt, an organic solvent, and an additive as necessary and will be readily recognized by one of skill in the art. For example, the lithium salt may be expressed as $Li^+X^-$. In some embodiments, $X^-$ may be any one of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$. In some embodiments, the lithium salt comprises one or more of $LiBF_4$ and $LiPF_6$. Non-limiting examples of suitable organic solvents include carbonate solvents, ether solvents, ketone solvents, alcohol solvents, ester solvents, aprotic solvents, and the like. Non-limiting examples of suitable additives include fluorine-containing carbonate compounds, vinylidene carbonate compounds, fluorine-containing lithium phosphate compounds, sultone compounds, sulfate compounds, borate compounds, nitrile compounds, amine compounds, silane compounds, benzene compounds, and the like.

In another aspect, the present disclosure provides a method of making an anode active material which comprises carbon-based particles, each of which comprise a plurality of pores and a silicon coating layer formed inside the pores for use in an anode of a lithium secondary battery.

In some embodiments, carbon-based particles may be prepared by thermally decomposing (also known as carbonizing) a polymer or an organic material (e.g., plant biomass). Carbonized material may then be activated.

Examples of polymers that may be decomposed (or carbonized) include, without limitation, phenol resins, resol resins, novolac resins, pitch, melamine resins, acrylic resins, styrene resins, vinyl alcohol resins, vinylpyrrolidone resins, and the like. In one embodiment, the polymer is a resol resin. In one embodiment, the polymer is a resol resin prepared by reacting phenol and formaldehyde at a ratio of 1:2 in the presence of triethylamine. In one embodiment, the polymer is a resol resin prepared by reacting phenol and formaldehyde at a ratio of 1:2 in the presence of triethylamine at a temperature of 80 °C to 90 °C. In one embodiment, the polymer is a resol resin prepared by reacting phenol and formaldehyde at a ratio of 1:2 in the presence of triethylamine at a temperature of 80 °C to 90 °C for about 4 hours. In some embodiments, the polymer is a resol resin that has been stabilized with poly(vinyl alcohol). In some embodiments, the polymer is a resol resin that has been cured with hexamethylene tetramine.

In some embodiments, carbonization may include calcinating the polymer or organic material at about 600 °C to 900 °C under an inert gas or nitrogen atmosphere. In one embodiment, the polymer is a resol resin which is carbonized at about 900 °C under nitrogen atmosphere.

Activation of the carbonized material may include physical activation and chemical activation. For example, in some embodiments, physical activation may include injecting a gas that is reactive with carbon (such as steam, carbon dioxide gas, etc.) into a reactor loaded with the carbonized material, followed by calcining the same at about 700 °C to 1000 °C. In one embodiment, resol resin is carbonized and calcined at about 900 °C under nitrogen atmosphere in the presence of carbon dioxide gas.

In some embodiments, chemical activation may include treating the carbonized polymer with a chemical activator (*e.g.,* acidic and basic agents such as KOH, $Na_2CO_3$, NaOH, $H_3PO_4$, etc.).

In some embodiments, the pores of the carbon-based particles may have a size of about 0.1 nm to about 50 nm, about 0.1 nm to about 30 nm, about 0.5 nm to about 20 nm, or about 1 nm to about 15 nm. Pore size may be measured by methods known in the art, such as by nitrogen gas adsorption or mercury porosimetry.

Thereafter, a silicon coating layer may be formed in the pores of the carbon-based particles using chemical vapor infiltration (CVI). Non-limiting examples of suitable silicon sources that may be used for the CVI-formation of the silicone coating layer include silane gas, silane derivatives (*e.g.,* disilane, trisilane, tetrasilane, etc.), chlorosilane, and the like.

By using the methods described herein, the silicon coating layer may be formed in pores having a particular distance from the center of the carbon-based particle. For example, when defining the distance between the center and a surface of the carbon-based particle as R, in some embodiments, the silicon coating layer may be formed in pores that are about 0.3R from the surface of the carbon-based particle. In some embodiments, the silicon coating layer may be formed in pores that are about 0.2R from the surface of the carbon-based particle. In some embodiments may be formed in pores that are about 0.1R from the surface of the carbon-based particle.

In some embodiments, the method of making an anode active material may further comprise forming a silicon coating layer on an outer surface of the carbon-based particles, thereby generating silicon-carbon composite particles that have silicon coating layers inside the pores and on an outer surface of the carbon-based particles. In some embodiments, the amount of silicon atoms located inside the pores of the silicon-carbon composite particles is greater than the amount of silicon atoms located on the outer surface of the silicon-carbon composite particles, thereby further reducing the change in the volume of the silicon-carbon composite particles due to intercalation and deintercalation of lithium ions during battery use.

In some embodiments, the silicon-carbon composite particles may optionally comprise forming a silicon oxide coating layer on a surface of the silicon coating layer. In some embodiments, the silicon oxide is $SiO_x$, wherein $0 < x < 2$. A silicon oxide coating layer may be formed by calcination while injecting oxygen gas into a reaction furnace loaded with silicon-carbon composite particles, thereby oxidizing silicon atoms of the silicon coating later to form silicon oxide.

In some embodiments, the silicon-carbon composite particles optionally may further comprise a carbon coating layer formed on the silicon oxide coating layer. In some embodiments, the carbon coating layer comprises a conductive polymer such as polyacetylene, polyaniline, polypyrrole, polythiophene, any combination thereof, but is not limited thereto.

A carbon coating layer may be formed by dry coating (*e.g.,* chemical vapor deposition (CVD)) using a carbon-containing gas or wet coating using a solution of a carbon-containing compound and thermal decomposition.

Advantageously, by including a carbon coating layer, contact between silicon coating layer and a dispersion medium (*e.g.,* water), such as is the case in an anode slurry, contact between the silicone coating layer and moisture in the air may be reduced or prevented thereby reducing or preventing deterioration of the silicon-carbon composite particles. In addition, electrical conductivity of the silicon-carbon composite particles may be improved.

Hereinafter, preferred examples of the present invention and comparative examples will be described. However, the following examples are only preferred examples of the present invention, and the present invention is not limited thereto.

EXAMPLES

**Preparative Example 1**

**(1) Preparation of porous carbon-based particles**

1) Synthesis of resol oligomer

Phenol and formaldehyde were input into a reactor at a molar ratio of 1:2 and 1.5 parts by weight of triethylamine was added based on a total 100 parts by weight of the phenol and the formaldehyde, followed by performing a reaction for 4 hours under conditions of 85 °C and 160 rpm (stirring).

2) Stabilization of suspension of resol oligomer

1 g of poly(vinyl alcohol) (PVA) was dispersed in a water-dispersible medium, followed by mixing it with the resol oligomer.

3) Curing of resol oligomer

The resol oligomer suspension and 3 g of hexamethylene tetramine (HMTA) as a curing agent were mixed and allowed to react for 12 hours at 98 °C and 400 rpm (stirring).

4) Obtainment of carbon-based particles

The cured product of the resol oligomer was characterized and washed with water. Thereafter, the unreacted monomer and oligomer were removed from the washed cured product using ethanol.

5) Carbonization and activation

The carbon-based particles were put into a calcination furnace and calcined under a nitrogen atmosphere at 900 °C for 1 hour to obtain porous carbon-based particles. During the calcination, $CO_2$ gas was introduced into the calcination furnace at a flow rate of 1 L/min.

**(2) Formation of silicon coating layer and preparation of silicon-carbon composite particles**

The porous carbon-based particles were loaded into a CVD coater. Silicon was deposited on the porous carbon-based particles by injecting silane gas into the CVD coater at a flow rate of 50 to 100 mL/min, increasing a temperature thereof to 200 °C at a heating rate of 5 to 20 °C/min, and maintaining the temperature at 200 °C for about 2 hours.
The content of silicon atoms of the prepared silicon-carbon composite particles was measured using inductively coupled plasma optical emission spectrometry (ICP-OES). The measured content of silicon atoms of the total weight of the silicon-carbon composite particles was 41.5 wt.%.

**Preparative Example 2**

A silicon oxide coating layer and a carbon coating layer were further formed on the silicon-carbon composite particles of Preparative Example 1 according to the following (3) and (4) procedures.

**(3) Formation of silicon oxide coating layer**

The silicon-carbon composite particles of Preparative Example 1 were loaded into a CVD coater.
The surface of the coating layer of the silicon-carbon composite particles was subjected to oxidization treatment by injecting oxygen gas into the CVD coater at a flow rate of 50 to 100 mL/min, increasing a temperature thereof to 100 °C at a heating rate of 5 to 20 °C/min, and maintaining the temperature at 100 °C for about 1 hour.

**(4) Formation of carbon coating layer**

The silicon-carbon composite particles prepared in the above (3) were added to a solution in which pitch was dispersed in a tetrahydrofuran solvent, and dispersed by ultrasonic waves for 30 minutes, followed by stirring the same for 24 hours to prepare a dispersion.

The prepared dispersion was dried for 24 hours and calcined at about 600 °C to form a carbon coating layer.

**Examples and Comparative Examples**

1. Preparation of anode

A first anode slurry and a second anode slurry were prepared using distilled water as a dispersion medium according to the compositions described in Table 1 below.

[TABLE 1]

| | First anode slurry | Second anode slurry |
|---|---|---|
| | Adhesive Layer | Anode Active Layer |
| Example 1 | A-1 | Preparative Example 1 + A-2 + B-1 (88.4:10.6:1 w/w/w) |
| Example 2 | A-1 | Preparative Example 1 + A-1 + B-1 (88.4:10.6:1 |
| | | w/w/w) |
| Example 3 | A-1 | Preparative Example 1 + A-2 + B-2 (88.4:10.6:1 w/w/w) |
| Example 4 | A-1 | Preparative Example 2 + A-2 + B-1 (88.4:10.6:1 w/w/w) |
| Example 5 | A-1 + B-2 (97:3 w/w) | Preparative Example 1 + A-2 + B-1 (88.4:10.6:1 w/w/w) |
| Comparative Example 1 | Preparative Example 1 + A-1 + B-1 (87.5:11.5:1 w/w/w) | |
| Comparative Example 2 | Preparative Example 1 + A-2 + B-1 (87.5:11.5:1 w/w/w) | |
| Comparative Example 3 | Preparative Example 1 + A-1 + B-2 (87.5:11.5:1 w/w/w) | |
| Comparative Example 4 | Preparative Example 1 + A-2 + B-2 (87.5:11.5:1 w/w/w) | |
| <Binder><br>A-1: SBR (Content of butadiene-derived unit: 90 mol%)<br>A-2: SBR (Content of butadiene-derived unit: 50 mol%)<br><Thickener ><br>B-1: CMC (Mw= $4\times10^5$ g/mol, Degree of substitution: 1.2)<br>B-2: CMC (Mw= $3\times10^6$ g/mol, Degree of substitution: 0.6) | | |

An anode including an adhesive layer and an anode active material layer was prepared by sequentially applying the first anode slurry and the second anode slurry to a region of a copper foil having a protrusion part (*i.e.,* anode tab) on one side except for the protrusion part, followed by drying and pressing the same. The adhesive layer and the anode active material layer were adjusted to have a thickness of 2 $\mu$m and 40 $\mu$m, respectively.

However, in the comparative examples, only the anode active material layer was formed using only the second anode slurry.

The anodes according to the examples and comparative examples were adjusted to have the same thickness as each other.

2. Manufacture of lithium secondary battery

A cathode slurry was prepared by dispersing Li($Ni_{0.8}Co_{0.1}Mn_{0.1}$)$O_2$, carbon black and PVDF in N-methyl-2-pyrrolidone (NMP) in a weight ratio of 92:5:3.

A cathode was prepared by applying the cathode slurry to a region of an aluminum foil having a protrusion part (i.e., cathode tab) on one side except for the protrusion part, followed by drying and pressing the same.

An electrode assembly was formed by interposing a polyethylene separation membrane (thickness: 20 $\mu$m) between the cathode and the anode. A cathode lead and an anode lead were connected to the cathode tab and the anode tab by welding, respectively.

1 M LiPF$_6$ solution (a mixed solvent of EC/EMC in a ratio of 30:70 v/v) was prepared. An electrolyte was prepared by adding 1 wt.% of fluoroethylene carbonate (FEC), 1 wt.% of LiPO$_2$F$_2$, 0.5 wt.% of 1,3-propane sultone (PS) and 0.5 wt.% of prop-1-ene-1,3-sultone (PRS) based on 100% wt.% of the electrolyte to the LiPF$_6$ solution.

The electrode assembly was housed in a pouch so that some regions of the cathode lead and the anode lead were exposed to an outside of the pouch, followed by sealing three sides of the pouch except for a side of an electrolyte injection part.

A lithium secondary battery was manufactured by injecting the electrolyte into the pouch and sealing the side of the electrolyte injection part.

## Experimental Example 1: Evaluation of adhesive force

Specimens were prepared by cutting the anodes prepared above into a size of 150 mm × 18 mm, respectively.

A tape having a width of 18 mm was attached to the copper foil of the specimen. The specimen and the tape were compressed using a roller having a load of 2 kg so that they could be sufficiently adhered to each other.

After attaching the anode active material layer of the specimen to one side of a tensile tester (IMADA, DS2-50N) with a double-sided tape, the adhesive force was measured by fastening the tape attached to the copper foil to the other side of the tensile tester.

## Experimental Example 2: Evaluation of displacement of anode active material

After formation of the lithium secondary batteries of the examples and comparative examples, the lithium secondary batteries were 0.3C CC/CV charged (4.2 V 0.05C cut-off), then disassembled.

An edge of the anode and/or a vicinity adjacent to the anode tab was visually observed to determine whether the anode active material was displaced. Standards for evaluation are as follows.

○: No displacement of anode active material was observed

×: Displacement of anode active material was observed

## Experimental Example 3: Evaluation of direct current internal resistance (DCIR) after discharging for 10 seconds

The lithium secondary batteries of the examples and comparative examples were 0.3C CC/CV charged (4.2 V 0.05C CUT-OFF) at 25 °C, and then 0.3C CC discharged until 50% point of state-of-charge (SOC). DCIR was measured by discharging at 1C for 10 seconds at 50% point of SOC.

## Experimental Example 4: Evaluation of rapid charging lifespan

The lithium secondary batteries of the examples and comparative examples were charged at 2.5C-2.25C-2C-1.75C-1.5C-1.0C stage by stage in a section of SOC 8-80%, and 0.33C CC discharged until 8% point of SOC. A discharge capacity C1 at the first time was measured, and the charge and discharge were repeated 100 times, then a discharge capacity C2 at the 100th time was measured.

The rapid charge capacity retention rate was calculated by the following equation:

$$\text{Rapid charge capacity retention rate (\%)} = C2/C1 \times 100 \ (\%)$$

[TABLE 2]

| | Adhesive force (N/18mm) | Evaluation of displacement of anode active material | 10s DC-IR (mOhm) | Rapid charge capacity retention rate (%) |
|---|---|---|---|---|
| Example 1 | 5.5 | ○ | 1.59 | 95.0 |
| Example 2 | 5.5 | ○ | 1.93 | 81.0 |
| Example 3 | 5.4 | ○ | 1.67 | 82.0 |
| Example 4 | 5.4 | ○ | 1.60 | 95.1 |
| Example 5 | 5.4 | ○ | 1.57 | 94.8 |

(continued)

|  | Adhesive force (N/18mm) | Evaluation of displacement of anode active material | 10s DC-IR (mOhm) | Rapid charge capacity retention rate (%) |
|---|---|---|---|---|
| Comparative Example 1 | 4.2 | ○ | 1.98 | 80.4 |
| Comparative Example 2 | 3.2 | × | 1.68 | 93.7 |
| Comparative Example 3 | 4.5 | ○ | 2.02 | 76.0 |
| Comparative Example 4 | 3.4 | × | 1.75 | 88.5 |

Referring to Table 2, the anodes of the examples, in which the adhesive layer was included between the anode current collector and the anode active material layer, exhibited the improved adhesive force and displacement prevention performance of the anode active material.

On the other hand, the anodes of the comparative examples exhibited the deteriorated adhesive force (or adhesive force and displacement prevention performance of the anode active material).

In Examples 1, 4 and 5, binders of the adhesive layer and the anode active material layer were adjusted to satisfy a predetermined condition, and CMC satisfying the predetermined condition was used for the anode active material layer. Thereby, all the lithium secondary batteries of these examples exhibited the improved anode adhesive force, displacement prevention performance of the anode active material, resistance properties, and rapid charging performance.

**Claims**

1.   An anode for a lithium secondary battery comprising:

an anode current collector (125);
an adhesive layer (122) formed on the anode current collector (125) and comprising a first binder; and
an anode active material layer (124) formed on the adhesive layer (122) and comprising an anode active material including a plurality of silicon-carbon composite particles and a second binder,
wherein the silicon-carbon composite particles comprise carbon-based particles comprising a plurality of pores, and a silicon coating layer formed inside the pores.

2.   The anode for a lithium secondary battery according to claim 1, wherein a silicon coating layer is also formed on an outer surface of the silicon-carbon composite particles.

3.   The anode for a lithium secondary battery according to claim 2, wherein the pores comprise a larger amount of silicon atoms than the outer surface of the silicon-carbon composite particles.

4.   The anode for a lithium secondary battery according to one of claims 1 to 3,
wherein the silicon-carbon composite particles further comprise a silicon oxide coating layer formed on a surface of the silicon coating layer and a carbon coating layer formed on a surface of the silicon oxide coating layer.

5.   The anode for a lithium secondary battery according to one of claims 1 to 4,
wherein the silicon-carbon composite particles comprise about 30% to about 50% by weight of silicon atoms.

6.   The anode for a lithium secondary battery according to one of claims 1 to 5,
wherein the adhesive layer comprises about 80% by weight or more of first binder.

7.   The anode for a lithium secondary battery according to one of claims 1 to 6,
wherein the anode active material layer comprises about 80 wt.% or more of the silicon-carbon composite particles.

8.   The anode for a lithium secondary battery according to one of claims 1 to 7,

wherein the anode active material layer (124) further comprises a first cellulosic thickener having a weight average molecular weight of about $4 \times 10^5$ g/mol to about $3 \times 10^6$ g/mol.

9. The anode for a lithium secondary battery according to claim 8, wherein the adhesive layer (122) further comprises a second cellulosic thickener having a greater weight average molecular weight than that of the first cellulosic thickener, preferably wherein the second cellulosic thickener has a weight average molecular weight of about $3 \times 10^6$ g/mol to about $6 \times 10^6$ g/mol.

10. The anode for a lithium secondary battery according to claims 9, wherein the first cellulosic thickener has a degree of substitution of about 0.8 to about 1.5, and the second cellulosic thickener has a degree of substitution of about 0.5 to about 1.

11. The anode for a lithium secondary battery according to one of claims 1 to 10,

wherein the adhesive force of the first binder to the anode current collector is greater than the adhesive force of the second binder to the anode current collector,
and/or wherein the second binder may have a smaller specific resistance than a specific resistance of the first binder thereby improving rapid charging performance of the battery.

12. The anode for a lithium secondary battery according to one of claims 1 to 11, wherein the first binder and the second binder include a first styrene-butadiene rubber and a second styrene-butadiene rubber, respectively, and

the first styrene-butadiene rubber comprises a greater molar ratio of butadiene-derived units than the second styrene-butadiene rubber, preferably wherein the first styrene-butadiene rubber comprises about 55 mol% to about 95 mol% of butadiene-derived units, and
the second styrene-butadiene rubber comprises about 5 mol% to about 50 mol% of butadiene-derived units.

13. The anode for a lithium secondary battery according to one of claims 1 to 12, wherein a ratio of a thickness of the anode active material layer to a thickness of the adhesive layer is about 15 to about 80.

14. The anode for a lithium secondary battery according to one of claims 1 to 13, wherein the adhesive layer has a thickness of about 0.5 $\mu$m to about 5 $\mu$m, and the anode active material layer has a thickness of about 30 $\mu$m to about 40 $\mu$m.

15. A lithium secondary battery comprising the anode for a lithium secondary battery according to one of claims 1 to 14; and a cathode facing to the anode.

EP 4 318 625 A1

FIG. 1

FIG. 2

14

107          127          I

150

160

FIG. 3

Europäisches
Patentamt

European
Patent Office

Office européen
des brevets

## EUROPEAN SEARCH REPORT

Application Number

EP 23 18 6799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/170475 A1 (PARK BENJAMIN YONG [US] ET AL) 19 June 2014 (2014-06-19) | 1-15 | INV.<br>H01M4/04 |
| Y | * page 3, paragraph 0056 - page 18, paragraph 0163; figures 1-34; tables I-VII * | 8-10 | H01M4/133<br>H01M4/134<br>H01M4/36<br>H01M4/38 |
| X | US 2015/280221 A1 (ABDELSALAM MAMDOUH [GB] ET AL) 1 October 2015 (2015-10-01) | 1-15 | H01M4/587<br>H01M4/62 |
| Y | * page 4, paragraph 0103 - page 16, paragraph 0271; figures 1-19 * | 8-10 | ADD.<br>H01M4/1395 |
| X | US 2021/234191 A1 (LEE YONG SEOK [KR] ET AL) 29 July 2021 (2021-07-29) | 1-5, 7-12,15 | H01M10/0525<br>H01M4/02 |
| Y | * page 3, paragraph 0045 - page 7, paragraph 0120; figures 1-3; table 1 * | 8-10 | |
| X | US 2021/013496 A1 (TSUZUKI KOUHEI [JP] ET AL) 14 January 2021 (2021-01-14) | 1-4, 7-11,15 | |
| Y | * page 1, paragraph 0010 - page 7, paragraph 0081; figure 1; table 1 * | 8-10 | |
| Y | US 2018/358622 A1 (YOO JUNG WOO [KR] ET AL) 13 December 2018 (2018-12-13)<br>* page 1, paragraph 0012 - page 4, paragraph 0057; table 1 * | 8-10 | TECHNICAL FIELDS SEARCHED (IPC)<br><br>H01M |
| A | Thomas: "GPC/SEC Practical Tips and Tricks",<br>,<br>1 October 2011 (2011-10-01), XP055608344,<br>Retrieved from the Internet:<br>URL:https://www.agilent.com/cs/library/slidepresentation/Public/GCC2011-Wksp_GPC_Tips-and-Tricks_Presentation.pdf<br>[retrieved on 2019-07-24]<br>* the whole document * | 1-15 | |

The present search report has been drawn up for all claims

| Place of search | Date of completion of the search | Examiner |
|---|---|---|
| Munich | 21 December 2023 | Polisski, Sergej |

EPO FORM 1503 03.82 (P04C01)

## ANNEX TO THE EUROPEAN SEARCH REPORT
## ON EUROPEAN PATENT APPLICATION NO.

EP 23 18 6799

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2023

| Patent document cited in search report | | | Publication date | Patent family member(s) | | | Publication date |
|---|---|---|---|---|---|---|---|
| US 2014170475 | A1 | | 19-06-2014 | US | 2014170475 | A1 | 19-06-2014 |
| | | | | US | 2014295290 | A1 | 02-10-2014 |
| | | | | US | 2018040873 | A1 | 08-02-2018 |
| | | | | US | 2018062154 | A1 | 01-03-2018 |
| | | | | US | 2018219211 | A1 | 02-08-2018 |
| | | | | US | 2020212422 | A1 | 02-07-2020 |
| | | | | US | 2022069274 | A1 | 03-03-2022 |
| | | | | US | 2022173372 | A1 | 02-06-2022 |
| | | | | US | 2022173373 | A1 | 02-06-2022 |
| US 2015280221 | A1 | | 01-10-2015 | CN | 104885262 | A | 02-09-2015 |
| | | | | EP | 2915204 | A1 | 09-09-2015 |
| | | | | GB | 2507535 | A | 07-05-2014 |
| | | | | JP | 6277197 | B2 | 07-02-2018 |
| | | | | JP | 2015537347 | A | 24-12-2015 |
| | | | | KR | 20150086288 | A | 27-07-2015 |
| | | | | US | 2015280221 | A1 | 01-10-2015 |
| | | | | WO | 2014068318 | A1 | 08-05-2014 |
| US 2021234191 | A1 | | 29-07-2021 | CN | 113193225 | A | 30-07-2021 |
| | | | | KR | 20210096814 | A | 06-08-2021 |
| | | | | US | 2021234191 | A1 | 29-07-2021 |
| US 2021013496 | A1 | | 14-01-2021 | CN | 111344884 | A | 26-06-2020 |
| | | | | EP | 3780169 | A1 | 17-02-2021 |
| | | | | JP | 7161523 | B2 | 26-10-2022 |
| | | | | JP | WO2019187537 | A1 | 25-03-2021 |
| | | | | US | 2021013496 | A1 | 14-01-2021 |
| | | | | WO | 2019187537 | A1 | 03-10-2019 |
| US 2018358622 | A1 | | 13-12-2018 | CN | 107534153 | A | 02-01-2018 |
| | | | | EP | 3276714 | A1 | 31-01-2018 |
| | | | | JP | 6659012 | B2 | 04-03-2020 |
| | | | | JP | 2018517246 | A | 28-06-2018 |
| | | | | KR | 20170055359 | A | 19-05-2017 |
| | | | | PL | 3276714 | T3 | 13-09-2021 |
| | | | | US | 2018358622 | A1 | 13-12-2018 |
| | | | | WO | 2017082546 | A1 | 18-05-2017 |

EPO FORM P0459

For more details about this annex : see Official Journal of the European Patent Office, No. 12/82